# EUROPÄISCHE PATENTANMELDUNG

(11) **EP 4 541 455 A1**
(43) Veröffentlichungstag der Anmeldung: **23.04.2025**
(21) Anmeldenummer: 23204771.2
(22) Anmeldetag: 20.10.2023
(51) Int. Cl.: B01J 6/00, B01J 19/00

(54) **OXIDATIONSREAKTOR ZUR PARTIALOXIDATION EINES EINSATZSTROMS**

(71) Anmelder: L'AIR LIQUIDE, SOCIETE ANONYME POUR L'ETUDE ET L'EXPLOITATION DES PROCEDES GEORGES CLAUDE, 75007 Paris (FR)
(72) Erfinder: Coscia, Antonio, 60439 Frankfurt am Main (DE)
(74) Vertreter: Air Liquide

(57) **Zusammenfassung**

Die Erfindung betrifft einen Oxidationsreaktor zur Partialoxidation eines Einsatzstroms mit einem Sauerstoff enthaltenden Oxidationsmittelstrom zu einem Wasserstoff enthaltenden Produktstrom. Die Partialoxidation kann dabei als nichtkatalytische Partialoxidation (POX) oder als autothermes Reformieren (ATR) durchgeführt werden. Als Einsatzströme kommen dabei kohlenwasserstoffhaltige Ströme, aber auch Ammoniak enthaltende Ströme in Frage. Erfindungsgemäß wird der Oxidationsreaktor mit mehreren Kühlzonen ausgerüstet wird, die den Reaktormantel umgeben. Hierdurch kann der Oxidationsreaktor weiterbetrieben werden, wenn beispielsweise nur eine Revision oder Reparatur an einer bestimmten Stelle des Reaktormantels erforderlich ist. Während der Zeitdauer der Revisions- bzw. Reparaturmaßnahmen kann der Oxidationsreaktor weiter betrieben werden, so dass Produktionsstillstände vermieden werden.

## Beschreibung

### Gebiet der Erfindung

Die Erfindung betrifft einen Oxidationsreaktor zur Partialoxidation eines Einsatzstroms mit einem Sauerstoff enthaltenden Oxidationsmittelstrom zu einem Wasserstoff enthaltenden Produktstrom. Die Partialoxidation kann dabei als nichtkatalytische Partialoxidation (POX) oder als autothermes Reformieren (ATR) durchgeführt werden. Als Einsatzströme kommen dabei kohlenwasserstoffhaltige Ströme, aber auch Ammoniak enthaltende Ströme in Frage.

Die Erfindung betrifft weiterhin ein Verfahren zum Herstellen eines Rohsynthesegasstroms aus einem Kohlenwasserstoffe enthaltenden Einsatzstrom und einem Sauerstoff enthaltenden Oxidationsmittelstrom mittels nichtkatalytischer Partialoxidation oder mittels autothermem Reformieren sowie ein Verfahren zum Herstellen eines Wasserstoff und Stickstoff enthaltenden Produktstroms aus einem Ammoniak enthaltenden Einsatzstrom und einem Sauerstoff enthaltenden Oxidationsmittelstrom.

### Stand der Technik

Als Synthesegase bezeichnet man Wasserstoff und Kohlenoxide enthaltende Gasgemische, die in verschiedenen Synthesereaktionen Verwendung finden. Beispiele hierfür sind die Methanolsynthese, die Herstellung von Ammoniak nach dem Haber-Bosch-Verfahren oder die Fischer-Tropsch-Synthese. Klassische Wege zur Herstellung wasserstoffhaltiger Synthesegase umfassen die Dampfreformierung, das autotherme Reformieren (ATR) und die nichtkatalytische Partialoxidation (POX), wobei jeweils kohlenwasserstoffhaltige Einsatzmaterialien als Eduktströme verwendet werden. ATR und POX werden dabei in konstruktiv ähnlichen Oxidationsreaktoren durchgeführt, die sich im Wesentlichen durch das Vorhandensein einer Katalysatorschicht im unteren Teil des Oxidationsreaktors beim Autothermreformer unterscheiden.

Typischerweise wird die partielle Oxidation von kohlenwasserstoffhaltigem Einsatzmaterial zur Erzeugung von Synthesegas bei hohen Reaktortemperaturen im Bereich von 1000 °C bis 1500 °C und Drücken von bis zu 100 bara durchgeführt. Als Oxidationsreaktoren für die nichtkatalytische partielle Oxidation (POX-Reaktoren) werden häufig feuerfest ausgekleidete Reaktoren mit halbkugelförmigen oder annähernd halbkugelförmigen Kuppeln verwendet. Der Partialoxidationsbrenner (POX-Brenner) ist dabei in der Regel oben an der Kuppel angebracht und dient zum Einleiten des kohlenwasserstoffhaltigem Einsatzmaterials, des Sauerstoff enthaltenden Oxidationsmittels sowie - optional - eines oder mehrerer Moderatorströme.

Bei den aus dem Stand der Technik bekannten technischen Verfahren und Vorrichtungen zur Partialoxidation werden verschiedene Vorrichtungen zum Einleiten und Mischen der verschiedenen Ströme, also das kohlenwasserstoffhaltige Einsatzmaterial, ein in der Regel Sauerstoff enthaltendes Oxidationsmittel und manchmal ein Moderator vorgeschlagen. Als Moderator wird häufig Kohlendioxid (CO₂) oder Wasserdampf verwendet, wobei der Moderator über einen separaten Kanal innerhalb des Brenners separat in den Reaktor eingespeist oder stromaufwärts des Brenners einem oder mehreren der anderen Einsatzströme zugemischt wird. Als Oxidationsmittel wird typischerweise Luft, angereicherte Luft oder reiner Sauerstoff (mit mindestens 95 mol% Sauerstoff) eingesetzt. Ein kohlenwasserstoffhaltiger Beschickungsstrom ist ein Strom, der Kohlenwasserstoffe wie Methan oder höhere Kohlenwasserstoffe oder andere wasserstoff- und kohlenstoffhaltige Moleküle (z. B. Alkohole wie Methanol, Ethanol) enthält. Dies kann auch ein Strom sein, der von einem vorgeschalteten Primärreformer kommt und neben Kohlenmonoxid (CO), Wasserstoff (H₂), CO₂ und Wasser (H₂O) auch Kohlenwasserstoffe wie Methan, Ethan, Ethylen oder höhere Kohlenwasserstoffe wie Benzol, Toluol oder Xylole enthält. Die Vermischung des kohlenwasserstoffhaltigen Einsatzmaterials und des Oxidationsmittels erfolgt in der Regel in einem Reaktor in unmittelbarer Nähe der Einspritzdüsen.

Der grundsätzliche Aufbau und die Verwendung von Oxidationsreaktoren der beschriebenen Art sind aus dem Schrifttum an sich bekannt und werden beispielsweise in dem Artikel "Gas Production", Ullmann's Encyclopedia of Industrial Chemistry, Sixth Edition, 1998 Electronic Release, beschreibt in Kapitel 2.5 "Autothermal Catalytic Reforming" bzw. Kapitel 3. "Noncatalytic Partial Oxidation" beschrieben. Beide Reaktortypen weisen einen drucktragenden Reaktormantel aus einem in der Regel metallischen Werkstoff auf, der auf seiner Innenseite mit einer oder mehreren Schichten feuerfesten Materials, beispielsweise feuerfester Steine, ausgekleidet ist, die somit Schutzschichten gegen die im Reaktorinneren freigesetzte Wärme und gegebenenfalls gegen korrosive Gasbestandteile bilden.

Als Ausgangsstrom zur Erzeugung eines wasserstoffhaltigen Gases wird im neueren Schrifttum auch ein Ammoniak enthaltender Einsatzstrom vorgeschlagen, der mit einem Sauerstoff enthaltenden Oxidationsmittelstrom und optional einem Dampfstrom zu einem Wasserstoff enthaltenden Produktgas umgesetzt wird. Die Umsetzung kann dabei beispielsweise wiederum nach dem Prinzip der nichtkatalytischen Partialoxidation oder nach dem Prinzip des autothermen Reformierens in jeweils geeigneten Oxidationsreaktoren erfolgen.

Oxidationsreaktoren der genannten Art werden zumeist auf ihrer Außenseite gekühlt, um die Standzeiten der für den Oxidationsreaktor verwendeten Konstruktionsmaterialien zu erhöhen und die Energierückgewinnung zu verbessern. Hierzu wird der Oxidationsreaktor von einem Kühlmantel umgeben, der von einem fluiden Kühlmedium, oft Wasser unter Überdruck, durchströmt wird. Das Kühlmedium wird dazu in kalter Form in den Kühlmantel eingeleitet, nimmt einen Teil der im Reaktorinneren freigesetzten Reaktionsenthalpie auf und wird in erhitzter Form aus dem Kühlmantel ausgeleitet. Das erhitzte Kühlmedium wird sodann mittels eines oder mehrerer Kühler gekühlt und in gekühlter Form zurück in den Kühlmantel geführt, wodurch ein Kühlmedienkreislauf gebildet wird. Die dem erhitzten Kühlmedium bei der Kühlung entzogene Wärmemenge kann durch indirekten Wärmetausch wiedergewonnen werden.

Nachteilig bei der beschriebenen Vorgehensweise ist es, dass bei der bislang üblichen Konstruktionsweise der Oxidationsreaktoren deren Betrieb grundsätzlich auch für kurze Zeitdauer nur mit in Betrieb befindlichem Kühlsystem möglich ist. Dies bedeutet, dass der Oxidationsreaktor vollständig außer Betrieb genommen werden muss, falls das Kühlsystem ausfällt oder der Kühlmantel wegen Reparatur- oder Revisionsarbeiten an der Außenseite des Reaktormantels demontiert werden muss. Dies führt zu Zusatzkosten wegen des entsprechenden Produktionsstillstands des Oxidationsreaktors.

### Beschreibung der Erfindung

Die Aufgabe der vorliegenden Erfindung besteht daher darin, einen Oxidationsreaktor zur Partialoxidation eines Einsatzstroms mit einem Sauerstoff enthaltenden Oxidationsmittelstrom zu einem Wasserstoff enthaltenden Produktstrom anzugeben, der die erwähnten Nachteile der aus dem Stand der Technik bekannten Oxidationsreaktoren nicht aufweist.

Diese Aufgabe wird in einem ersten Aspekt der Erfindung durch einen Oxidationsreaktor mit den Merkmalen des Anspruchs 1 gelöst.

In weiteren Aspekten wird die Aufgabe gelöst durch Verwendungen des Oxidationsreaktors mit den Merkmalen der Ansprüche 17 bis 19.

In weiteren Aspekten wird die Aufgabe gelöst durch ein Verfahren zum Herstellen eines Rohsynthesegasstroms aus einem Kohlenwasserstoffe enthaltenden Einsatzstrom und einem Sauerstoff enthaltenden Oxidationsmittelstrom mittels nichtkatalytischer Partialoxidation gemäß Anspruch 20 oder mittels autothermem Reformieren gemäß Anspruch 21 sowie durch ein Verfahren zum Herstellen eines Wasserstoff und Stickstoff enthaltenden Produktstroms aus einem Ammoniak enthaltenden Einsatzstrom und einem Sauerstoff enthaltenden Oxidationsmittelstrom gemäß Anspruch 22.

In weiteren Aspekten wird die Aufgabe gelöst durch weitere Ausgestaltungen der Erfindung, die sich aus den Unteransprüchen der jeweiligen Kategorie ergeben.

Unter einem sauerstoffhaltigen Oxidationsmittel ist jedes sauerstoffhaltige Fluid zu verstehen, wie z. B. reiner Sauerstoff mit beliebigem Reinheitsgrad, Luft oder jedes andere Fluid, das in der Lage ist, einem kohlenstoffhaltigen Reaktanten Sauerstoff zuzuführen.

Unter einem Mittel ist eine Sache zu verstehen, die die Erreichung eines Ziels ermöglicht oder dabei hilfreich ist. Insbesondere sind unter Mitteln zur Durchführung eines bestimmten Verfahrensschritts alle physischen Gegenstände zu verstehen, die ein Fachmann zur Durchführung dieses Verfahrensschritts in Betracht ziehen würde. Beispielsweise wird der Fachmann unter Mitteln zum Einleiten oder Ableiten eines Stoffstroms alle Transport- und Fördereinrichtungen, also z.B. Rohrleitungen, Pumpen, Kompressoren, Ventile, verstehen, die ihm zur Durchführung dieses Verfahrensschrittes auf Grund seiner Fachkenntnisse notwendig oder sinnvoll erscheinen.

Im Sinne dieser Beschreibung ist Dampf als Synonym für Wasserdampf zu verstehen, sofern nicht im Einzelfall etwas anderes angegeben ist. Im Gegensatz dazu bezieht sich der Begriff "Wasser" auf Wasser im flüssigen Zustand, sofern im Einzelfall nichts anderes angegeben ist.

Drücke werden, falls benötigt, in absoluten Druckeinheiten, kurz bara oder bar(a), oder in Überdruckeinheiten, kurz barg oder bar(g), angegeben, sofern im Einzelfall nichts anderes angegeben ist.

Unter einer Fluidverbindung zwischen zwei Bereichen der erfindungsgemäßen Vorrichtung oder Anlage ist jede Art von Verbindung zu verstehen, die es ermöglicht, dass ein Fluid, z. B. ein Gasstrom, von dem einen in den anderen der beiden Bereiche strömen kann, wobei zwischengeschaltete Bereiche oder Bauteile vernachlässigt werden. Unter einer direkten Fluidverbindung ist insbesondere jede Art von Verbindung zu verstehen, die es ermöglicht, dass ein Fluid, z. B. ein Gasstrom, direkt von dem einen in den anderen der beiden Bereiche strömt, wobei keine weiteren Bereiche oder Komponenten zwischengeschaltet sind, mit Ausnahme von reinen Transportvorgängen und den dafür erforderlichen Mitteln, z. B. Rohrleitungen, Ventile, Pumpen, Kompressoren, Speicher. Ein Beispiel wäre eine Rohrleitung, die direkt von dem einen in den anderen der beiden Bereiche führt.

Optional oder wahlweise bedeutet, dass das nachfolgend beschriebene Ereignis oder die Umstände eintreten oder nicht eintreten können oder bei denen ein Merkmal vorhanden sein kann oder nicht vorhanden sein kann. Die Beschreibung umfasst Fälle, in denen das Ereignis oder der Umstand eintritt, und Fälle, in denen es/er nicht eintritt. Ebenso umfasst die Beschreibung Fälle, in denen ein Merkmal vorhanden ist oder nicht vorhanden ist.

Die Bedingungen der nichtkatalytischen Partialoxidation und des autothermen Reformierens sind dem Fachmann aus dem Stand der Technik, beispielsweise den eingangs erörterten Dokumenten, bekannt. Es sind diejenigen physikalisch-chemischen Bedingungen, unter denen ein messbarer, bevorzugt ein technisch relevanter Umsatz von fluiden oder fluidisierten kohlenstoffhaltigen Einsatzstoffströmen zu Synthesegasprodukten erzielt wird. Hierzu zählen als wichtige Parameter das Einstellen einer geeigneten Partialoxidationstemperatur von typischerweise rund 1000 °C oder darüber. Insbesondere ist es kennzeichnend für die nichtkatalytische Partialoxidation, dass kein Katalysator indem Partialoxidationsreaktor vorhanden ist. Im Gegensatz hierzu ist es ein Kennzeichen des autothermen Reformierens, dass im unteren Teil des Oxidationsreaktors eine Schicht eines speziellen, aber an sich bekannten und im Handel erhältlichen ATR-Katalysators vorhanden ist.

Notwendige Anpassungen der Bedingungen der nichtkatalytischen Partialoxidation und des autothermen Reformierens an die jeweiligen Betriebserfordernisse wird der Fachmann auf der Grundlage von Routineversuchen vornehmen. Dabei können ggf. offenbarte, spezifische Reaktionsbedingungen als Orientierung dienen, sie sind aber in Bezug auf den Umfang der Erfindung nicht einschränkend zu verstehen.

Um einen Bruch aufgrund der thermischen Umfangsausdehnung der Schutzschichten zu vermeiden, werden bei mehrschichtigen Ausmauerungen von Oxidationsreaktoren mit feuerfesten Ziegeln häufig ringspaltförmige Freiräume zwischen den verschiedenen Schutzschichten bzw. zwischen Schutzschicht und Reaktormantel vorgesehen (ringspaltförmige Expansionslücken), die in radialer Richtung genügend Raum für eine thermische Ausdehnung bieten. Alternativ oder zusätzlich können periodische Dehnungsfugen in jeder Ziegelschicht (periodisch umlaufende Expansionslücken) und/oder zwischen den Ziegelschichten (Expansionslücken in Längsrichtung) vorgesehen werden. Auch Kombinationen von periodisch umlaufenden Expansionslücken, Expansionslücken in Längsrichtung, ringspaltförmigen Expansionslücken sind möglich.

Die Begriffe Eingang, Einlass, Ausgang, Auslass beziehen sich auf die Strömungsrichtung der Einsatzstoffe durch den Oxidationsreaktor.

Der Erfindung liegt die Erkenntnis zugrunde, dass die Nachteile der bislang aus dem Stand der Technik bekannten Oxidationsreaktoren umgangen werden können, wenn der Oxidationsreaktor mit mehreren Kühlzonen ausgerüstet wird, die den Reaktormantel umgeben. Hierdurch kann der Oxidationsreaktor weiterbetrieben werden, wenn beispielsweise nur eine Revision oder Reparatur an einer bestimmten Stelle des Reaktormantels erforderlich ist. Es wird dabei nur diejenige Kühlzone außer Betrieb genommen, die die betroffene Stelle des Reaktormantels umgibt, und sodann demontiert. Nach erfolgter Revision oder Reparatur wird diese Kühlzone remontiert und wieder in Betrieb gesetzt. Während der gesamten Zeitdauer der Revisions- bzw. Reparaturmaßnahmen kann der Oxidationsreaktor weiter betrieben werden, so dass Produktionsstillstände vermieden werden.

Vorteilhaft ist es ferner, dass durch das erfindungsgemäße Vorhandensein mehrerer Kühlzonen, beispielsweise mehrerer Kühlzonen, die über die Länge des Oxidationsreaktors angeordnet sind, besser auf eine unterschiedliche Wärmeproduktion entlang der Längsachse des Oxidationsreaktors reagiert werden kann. So könnte sich in einer beispielhaften Ausgestaltung des Oxidationsreaktors als ATR der Wärmehaushalt im oberen Brennerteil des Oxidationsreaktors von demjenigen im unteren Reaktorteil unterscheiden, der die ATR-Katalysatorschüttung umfasst. Mit der erfindungsgemäßen Ausgestaltung des Oxidationsreaktors mit mehreren Kühlzonen kann auf solche Unterschiede feiner reagiert werden, so dass sich eine verbesserte Temperaturkontrolle des Oxidationsreaktors ergibt.

### Bevorzugte Ausgestaltungen der Erfindung

Ein zweiter Aspekt der Erfindung ist dadurch gekennzeichnet, dass die erste und die zweite Kühlzone separat betreibbar und separat montierbar und demontierbar sind. Hierdurch kann der Oxidationsreaktor in einem Beispiel weiterbetrieben werden, wenn beispielsweise nur eine Revision oder Reparatur an einer bestimmten Stelle des Reaktormantels erforderlich ist. Während der Zeitdauer der Revisions- bzw. Reparaturmaßnahmen kann der Oxidationsreaktor weiter betrieben werden, so dass Produktionsstillstände vermieden werden.

Ein dritter Aspekt der Erfindung ist dadurch gekennzeichnet, dass der Durchfluss des Kühlmediums durch die erste und die zweite Kühlzone separat regelbar ist. Auf diese Weise kann auf örtliche Unterschiede im Wärmehaushalt des Oxidationsreaktors feiner reagiert werden, so dass eine verbesserte Temperaturkontrolle des Oxidationsreaktors resultiert.

Ein vierter Aspekt der Erfindung ist dadurch gekennzeichnet, dass der Druck des Kühlmediums in der ersten und zweiten Kühlzone separat regelbar ist. Auch auf diese Weise kann auf örtliche Unterschiede im Wärmehaushalt des Oxidationsreaktors feiner reagiert werden, so dass eine verbesserte Temperaturkontrolle des Oxidationsreaktors resultiert. Beispielsweise könnte eine Kühlzone mit siedendem Kühlmedium betrieben werden, woraus ein besonders intensiver Wärmeübergang resultiert, während das Kühlmedium in einer weiteren Kühlzone als einphasiges Fluid verbleibt.

Ein fünfter Aspekt der Erfindung ist dadurch gekennzeichnet, dass ein gemeinsames erstes und zweites fluides Kühlmedium verwendet wird, das die erste und die zweite Kühlzone durchströmt. Die Verwendung eines gemeinsamen Kühlmediums vereinfacht die Gestaltung des Kühlmittelkreislaufs.

Ein sechster Aspekt der Erfindung ist dadurch gekennzeichnet, dass die erste und zweite Kühlzone in Fluidverbindung stehen und dass der Massenstrom des Kühlmediums durch die erste und die zweite Kühlzone separat regelbar ist. Diese Ausgestaltung kombiniert die Vorteile eines vereinfachten Kühlmittelkreislaufs mit einer verbesserten Temperaturkontrolle des Oxidationsreaktors.

Ein siebter Aspekt der Erfindung ist dadurch gekennzeichnet, dass eine Kühlvorrichtung zur Zwischenkühlung des Kühlmediums zwischen der ersten und zweiten Kühlzone vorhanden ist. Diese Ausgestaltung ist vorteilhaft, wenn die Kühlmedien in beiden Kühlzonen einphasige Fluide bleiben sollen, aber trotzdem eine hohe Wärmeabfuhr aus der ersten Kühlzone erforderlich ist.

Ein achter Aspekt der Erfindung ist dadurch gekennzeichnet, dass mehr als zwei Kühlzonen vorhanden sind. Zwar erhöht sich bei dieser Ausgestaltung der konstruktive Aufwand, jedoch kann auf diese Weise noch feiner auf örtliche Unterschiede im Wärmehaushalt des Oxidationsreaktors reagiert werden, so dass eine weiter verbesserte Temperaturkontrolle des Oxidationsreaktors resultiert.

Ein neunter Aspekt der Erfindung ist dadurch gekennzeichnet, dass ein gemeinsames Kühlmedium verwendet wird, dass alle Kühlzonen durchströmt, wobei vorzugsweise Wasser als gemeinsames Kühlmedium verwendet wird. Wasser ist an den meisten Standorten in ausreichender Menge und Qualität verfügbar, ist ungiftig und weist Vorteile auf, wenn eine Kühlung in der entsprechenden Kühlzone als Siedekühlung realisiert werden soll. Die Verwendung eines gemeinsamen Kühlmediums vereinfacht zudem die Gestaltung des Kühlmittelkreislaufs.

Ein zehnter Aspekt der Erfindung ist dadurch gekennzeichnet, dass das Einlassende kegelstumpfförmig ausgestaltet ist und an seinem engen Ende mit dem Brenner gasdicht verbunden ist und an seinem weiten Ende mit dem Reaktormantel gasdicht verbunden ist.

Ein elfter Aspekt der Erfindung ist dadurch gekennzeichnet, dass die Wärmeleitfähigkeit der ersten Schutzschicht kleiner ist als die Wärmeleitfähigkeit der zweiten Schutzschicht. Vorteilhaft bei dieser Ausgestaltung ist die bremsende Wirkung der kleineren Wärmeleitfähigkeit der ersten Schutzschicht auf das Aufheizen des Reaktormantels, insbesondere wenn eine oder mehrere Kühlzonen nicht betrieben werden.

Ein zwölfter Aspekt der Erfindung ist dadurch gekennzeichnet, dass innerhalb der ersten und/oder innerhalb der zweiten Schutzschicht eine Vielzahl Expansionslücken vorhanden sind, die bevorzugt gleichmäßig über den Umfang und/oder die Länge der ersten und/oder zweiten Schutzschicht verteilt sind. Auf diese Weise wird eine Beschädigung der Schutzschichten durch thermisch Ausdehnung vermieden.

Ein dreizehnter Aspekt der Erfindung ist dadurch gekennzeichnet, dass zwischen dem Reaktormantel und der ersten Schutzschicht und/oder zwischen der ersten Schutzschicht und der zweiten Schutzschicht eine ringspaltförmige Expansionslücke angeordnet ist. Auf diese Weise wird eine Beschädigung der Schutzschichten durch thermische Ausdehnung vermieden.

Ein vierzehnter Aspekt der Erfindung ist dadurch gekennzeichnet, dass die Wanddicken und/oder Wärmeleitfähigkeiten der ersten und zweiten Schutzschicht so gewählt werden, dass die Temperatur des Reaktormantels an seiner äußeren Oberfläche zwischen 180 und 300 °C liegt, bevorzugt zwischen 200 und 250 °C liegt, falls kein Kühlmedium durch eine oder mehrere Kühlzonen geleitet wird. Diese genannten Temperaturen sind vorteilhaft, weil der Energieverbrauch, die Materialbeanspruchung und die Wärmebelastung des Bedienpersonals reduziert werden.

Ein fünfzehnter Aspekt der Erfindung ist dadurch gekennzeichnet, dass Wasser als gemeinsames Kühlmedium verwendet wird und dass die Wanddicken und Wärmeleitfähigkeiten der ersten und der zweiten Schutzschicht und der Massenstrom des gemeinsamen Kühlmediums durch die Kühlzonen so gewählt werden, dass die Temperatur des aus den Kühlzonen austretenden Kühlmediums kleiner als 100 °C ist. Diese Grenztemperatur ist vorteilhaft, weil der Energieverbrauch, die Materialbeanspruchung und die Wärmebelastung des Bedienpersonals reduziert werden. Bei Demontagen einer oder mehrerer Kühlzonen wird auf diese Weise beim Bedienpersonal das Verbrennungsrisiko durch versehentliches Berühren des freigelegten Reaktormantels verringert.

Ein sechzehnter Aspekt der Erfindung ist dadurch gekennzeichnet, dass ein Teil der Reaktionskammer mit einer Schüttung eines festen, partikelförmigen, für das autotherme Reformieren (ATR) aktiven Katalysators gefüllt ist.

Ein siebzehnter Aspekt der Erfindung betrifft die Verwendung eines Oxidationsreaktors nach Anspruch 1 bis 15 für die nichtkatalytische Partialoxidation (POX) eines Kohlenwasserstoffe enthaltenden Einsatzstroms zu einem Wasserstoff und Kohlenoxide enthaltenden Produktstrom.

Ein achtzehnter Aspekt der Erfindung betrifft die Verwendung eines Oxidationsreaktors nach Anspruch 16 für das autotherme Reformieren (ATR) eines Kohlenwasserstoffe enthaltenden Einsatzstroms zu einem Wasserstoff und Kohlenoxide enthaltenden Produktstrom.

Ein neunzehnter Aspekt der Erfindung betrifft die Verwendung eines Oxidationsreaktors nach Anspruch 1 bis 15 für die Partialoxidation eines Ammoniak enthaltenden Einsatzstroms zu einem Wasserstoff und Stickstoff enthaltenden Produktstrom.

Ein zwanzigster Aspekt der Erfindung betrifft ein Verfahren zum Herstellen eines Wasserstoff und Kohlenoxide enthaltenden Produktstroms aus einem Kohlenwasserstoffe enthaltenden Einsatzstrom und einem Sauerstoff enthaltenden Oxidationsmittelstrom.

Ein einundzwanzigster Aspekt der Erfindung betrifft ein Verfahren zum Herstellen eines Wasserstoff und Kohlenoxide enthaltenden Produktstroms aus einem Kohlenwasserstoffe enthaltenden Einsatzstrom und einem Sauerstoff enthaltenden Oxidationsmittelstrom.

Ein zweiundzwanzigster Aspekt der Erfindung betrifft ein Verfahren zum Herstellen eines Wasserstoff und Stickstoff enthaltenden Produktstroms aus einem Ammoniak enthaltenden Einsatzstrom und einem Sauerstoff enthaltenden Oxidationsmittelstrom.

### Ausführungsbeispiele

Weiterbildungen, Vorteile und Anwendungsmöglichkeiten der Erfindung ergeben sich auch aus der nachfolgenden Beschreibung von Ausführungsbeispielen und den Zeichnungen. Dabei bilden alle beschriebenen und/oder bildlich dargestellten Merkmale für sich oder in beliebiger Kombination die Erfindung, unabhängig von ihrer Zusammenfassung in den Ansprüchen oder deren Rückbeziehung.

Es zeigen:
- Fig. 1: eine schematische Darstellung einer ersten Ausgestaltung des Oxidationsreaktors gemäß der Erfindung;
- Fig. 2: eine schematische Darstellung einer zweiten Ausgestaltung des Oxidationsreaktors gemäß der Erfindung;
- Fig. 3: eine schematische Darstellung einer dritten Ausgestaltung des Oxidationsreaktors gemäß der Erfindung;
- Fig. 4: eine schematische Darstellung einer vierten Ausgestaltung des Oxidationsreaktors gemäß der Erfindung.

Im Folgenden ist die Angabe "nicht gezeigt" so zu verstehen, dass ein Element in der besprochenen Abbildung nicht grafisch dargestellt, aber gleichwohl vorhanden ist.

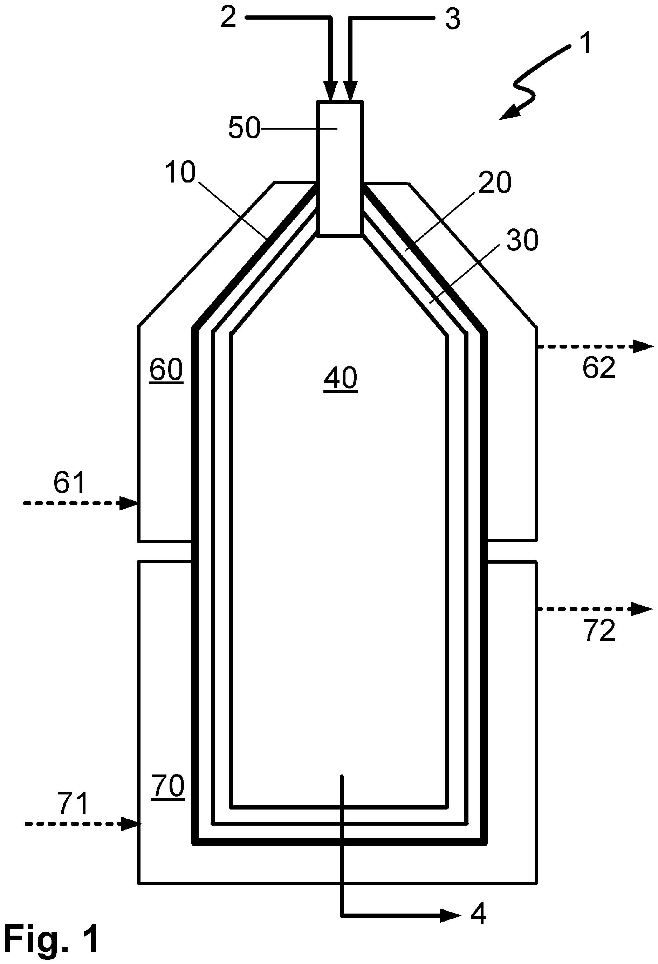

Fig. 1 zeigt eine schematische Darstellung einer ersten Ausgestaltung des Oxidationsreaktors 1 zur Partialoxidation eines Einsatzstroms mit einem Sauerstoff enthaltenden Oxidationsmittelstrom zu einem Wasserstoff enthaltenden Produktstrom gemäß der Erfindung. Der Oxidationsreaktor umfasst einen drucktragenden Reaktormantel 10, der aus einem metallischen Werkstoff besteht, auf einem Teil seiner Länge zylinderförmig ausgestaltet ist und eine erste Wanddicke aufweist. Im Inneren des Reaktormantels ist eine erste Schutzschicht 20 angebracht, die aus einem ersten feuerfesten Material mit einer zweiten Wanddicke besteht. Im Inneren der ersten Schutzschicht ist eine zweite Schutzschicht 30 angebracht, die aus einem zweiten feuerfesten Material mit einer dritten Wanddicke besteht. Im Inneren der zweiten Schutzschicht ist ein Leervolumen 40 als Reaktorkammer angeordnet.

An einem Einlassende des Reaktormantels 10 ist ein Einlass für den Einsatzstrom angebracht, wobei der Einlass als Brenner 50 ausgestaltet ist, durch den ein Einsatzstrom über eine Leitung 2 und ein Sauerstoff enthaltender Oxidationsmittelstrom über eine Leitung 3 in den Oxidationsreaktor 1 eingeleitet werden. Optional kann ein Moderatorstrom, umfassend Dampf und/oder Kohlendioxid, über Leitung 2 oder Leitung 3 oder eine separate, nicht gezeigte Leitung oder eine Kombination mindestens zweier dieser Leitungen in den Oxidationsreaktor eingeleitet werden.

An einem Auslassende des Reaktormantels ist eine Leitung 4 als Auslass angebracht, durch den der Produktstrom ausleitbar ist. Die Anbindung der Leitung 4 an die Reaktorkammer ist lediglich schematisch dargestellt und technische Details sind nicht gezeigt. Für den Fachmann ist allerdings klar, wie diese Anbindung auszugestalten ist.

An dem Reaktormantel 10 ist eine erste Kühlzone 60 angebracht, die so ausgestaltet ist, dass sie den Reaktormantel 10 umgibt und dass mit ihrer Hilfe ein erster Abschnitt des Reaktormantels 10 mittels eines ersten fluiden Kühlmediums kühlbar ist, das in kaltem Zustand über eine Leitung 61 in die erste Kühlzone 60 eingeleitet wird und das - nach Aufnahme eines Teils der im Oxidationsreaktor freigesetzten Wärmemenge - im aufgeheizten Zustand über eine Leitung 62 aus der ersten Kühlzone 60 ausgeleitet wird.

An dem Reaktormantel 10 ist ferner eine zweite Kühlzone 70 angebracht, die so ausgestaltet ist, dass sie den Reaktormantel 10 umgibt und dass mit ihrer Hilfe ein zweiter Abschnitt des Reaktormantels 10 mittels eines zweiten fluiden Kühlmediums kühlbar ist, das in kaltem Zustand über eine Leitung 71 in die zweite Kühlzone 70 eingeleitet wird und das - nach Aufnahme eines weiteren Teils der im Oxidationsreaktor freigesetzten Wärmemenge - im aufgeheizten Zustand über eine Leitung 72 aus der zweiten Kühlzone 70 ausgeleitet wird.

Das in der ersten und/oder in der zweiten Kühlzone 60, 70 erhitzte Kühlmedium wird sodann mittels eines oder mehrerer Kühler, nicht gezeigter Kühler gekühlt und in gekühlter Form zurück in die erste und/oder in die zweite Kühlzone 60, 70 geführt, wodurch ein oder mehrere Kühlmedienkreisläufe gebildet werden. Die dem erhitzten Kühlmedium bei der Kühlung entzogene Wärmemenge kann durch indirekten Wärmetausch wiedergewonnen und beispielsweise als Prozesswärme in einer Nachbaranlage verwendet werden.

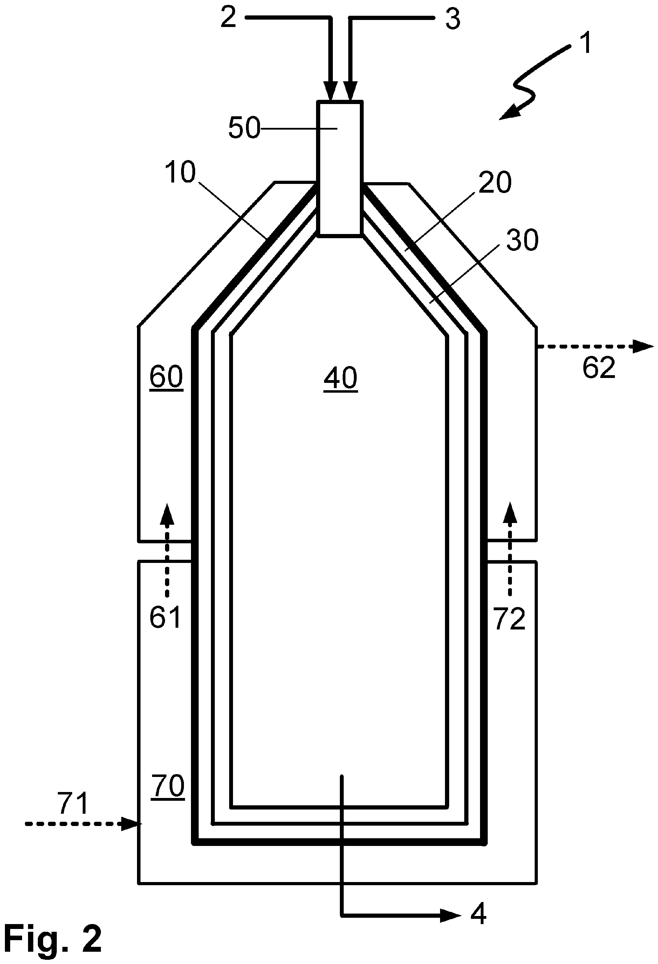

Fig. 2 zeigt eine schematische Darstellung einer zweiten Ausgestaltung des Oxidationsreaktors gemäß der Erfindung. Bezugszeichen gleicher Nummern bezeichnen Elemente der in den Figuren gezeigten Oxidationsreaktoren mit gleicher Funktion und Struktur, sofern nicht im Einzelzusammenhang anders vermerkt. Grundsätzlich entsprechen die in Fig. 2, 3, 4 gezeigten Ausgestaltungen derjenigen, die im Zusammenhang mit Fig. 1 erläutert wurde; auf Unterschiede wird separat hingewiesen.

Im Unterschied zu der in Fig. 1 gezeigten Ausführungsform der Erfindung sind die erste Kühlzone 60 und die zweite Kühlzone 70 über die Leitungen 61 und 72 miteinander verbunden, so dass das Kühlmedium über Leitung 71 zuerst in die zweite Kühlzone 70 gelangt und dort einen Teil der im Inneren des Oxidationsreaktors freigesetzten Wärme aufnimmt. Sodann gelangt das Kühlmedium über Leitung 72 in die erste Kühlzone 60 und nimmt dort einen weiteren Teil der im Inneren des Oxidationsreaktors freigesetzten Wärme auf. Schließlich wird das Kühlmedium über Leitung 62 aus der ersten Kühlzone ausgeleitet. Insgesamt ergibt sich daher eine Strömungsrichtung des Kühlmediums im Gegenstrom relativ zu der Strömungsrichtung der Edukt- und Produktgasströme des Oxidationsreaktors. Mittels einer Pumpe und eines Kühlers (beide nicht gezeigt) wird ein Kühlmedienkreislauf gebildet. Zusätzlich kann in einem Beispiel in die erste Kühlzone 60 über eine nicht gezeigte Leitung ein zusätzlicher, kalter Kühlmedienstrom eingeleitet werden. Zusätzlich kann in einem Beispiel aus der zweiten Kühlzone 60 über eine nicht gezeigte Leitung ein zusätzlicher, warmer Kühlmedienstrom ausgeleitet werden. Die Ausgestaltungen nach den beiden zuletzt genannte Beispielen erhöhen die Einsatzmöglichkeiten und verbessern die Temperaturkontrolle des Oxidationsreaktors zusätzlich.

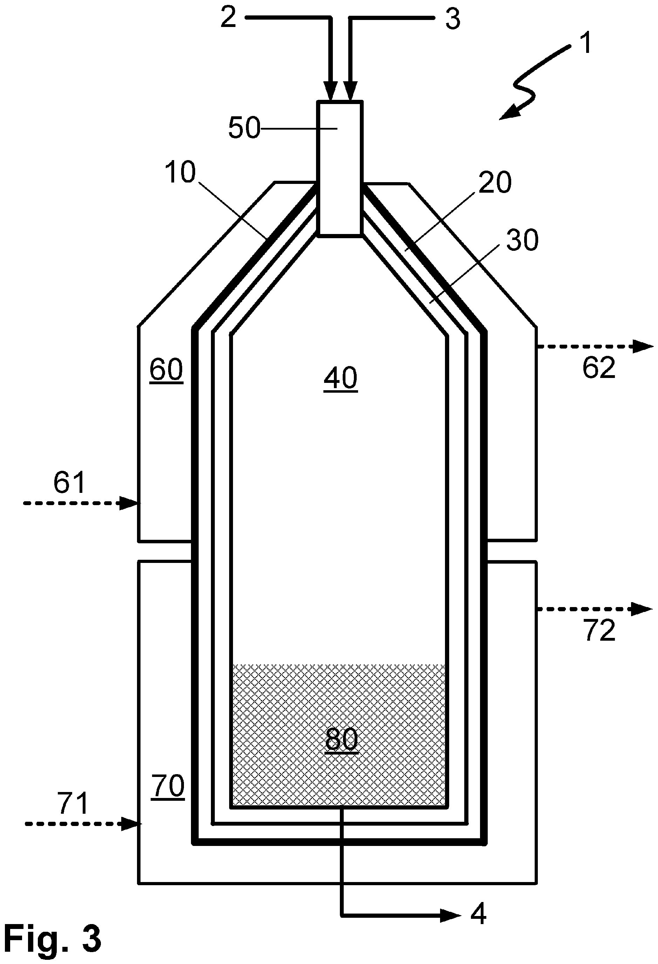

Fig. 3 zeigt eine schematische Darstellung einer dritten Ausgestaltung des Oxidationsreaktors gemäß der Erfindung. Bezüglich der Ausgestaltung der Kühlzonen entspricht diese Ausgestaltung der in Fig. 1 gezeigten Ausgestaltung, jedoch handelt es sich bei dem Oxidationsreaktor um einen Autothermreformer, der eine Schüttung 80 eines ATR-Katalysators im unteren Teil der Reaktorkammer 40 enthält. Für den Betrieb des Oxidationsreaktors als Autothermreformer wird neben dem sauerstoffhaltigen Oxidationsmittel über Leitung 2 oder Leitung 3 oder eine separate, nicht gezeigte Leitung oder eine Kombination mindestens zweier dieser Leitungen Dampf in den Oxidationsreaktor eingeleitet.

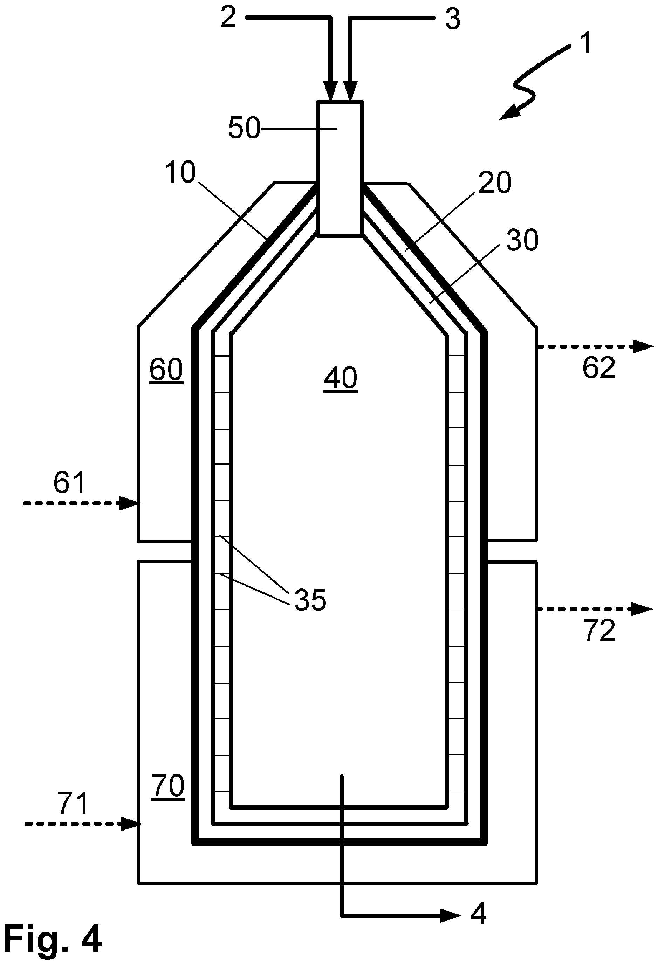

Fig. 4 zeigt eine schematische Darstellung einer vierten Ausgestaltung des Oxidationsreaktors gemäß der Erfindung. Bezüglich der Ausgestaltung der Kühlzonen entspricht diese Ausgestaltung der in Fig. 1 gezeigten Ausgestaltung, jedoch ist die zweite Schutzschicht 30 mit periodisch umlaufenden Expansionslücken 35 und/oder von Expansionslücken in Längsrichtung (nicht gezeigt) ausgerüstet. Diese Ausrüstung des Oxidationsreaktors mit Expansionslücken ist auch auf die in Fig. 1, 2, 3, gezeigten Ausgestaltungen übertragbar und vorteilhaft. Die Ausrüstung mit Expansionslücken kann sich auch auf den oberen, kegelstumpfförmigen Teil und den auslassseitigen Teil der zweiten Schutzschicht erstrecken (beides nicht gezeigt).

In weiteren Beispielen sind bei den in Fig. 1, 2, 3, 4 gezeigten Oxidationsreaktoren 1 die erste und die zweite Kühlzone 60, 70 separat betreibbar und separat montierbar und demontierbar (nicht gezeigt). Hierdurch kann der Oxidationsreaktor in einem Beispiel weiterbetrieben werden, wenn beispielsweise nur eine Revision oder Reparatur an einer bestimmten Stelle des Reaktormantels erforderlich ist. Während der Zeitdauer der Revisions- bzw. Reparaturmaßnahmen kann der Oxidationsreaktor 1 weiter betrieben werden, so dass Produktionsstillstände vermieden werden.

In weiteren Beispielen sind bei den in Fig. 1, 2, 3, 4 gezeigten Oxidationsreaktoren 1 der Durchfluss des Kühlmediums durch die erste und die zweite Kühlzone 60, 70 separat regelbar (nicht gezeigt). Auf diese Weise kann auf örtliche Unterschiede im Wärmehaushalt des Oxidationsreaktors feiner reagiert werden, so dass eine verbesserte Temperaturkontrolle des Oxidationsreaktors resultiert.

In weiteren Beispielen ist bei den in Fig. 1, 2, 3, 4 gezeigten Oxidationsreaktoren 1 der Druck des Kühlmediums in der ersten und zweiten Kühlzone 60, 70 separat regelbar (nicht gezeigt). Auch auf diese Weise kann auf örtliche Unterschiede im Wärmehaushalt des Oxidationsreaktors feiner reagiert werden, so dass eine verbesserte Temperaturkontrolle des Oxidationsreaktors resultiert. Beispielsweise könnte eine Kühlzone 60 oder 70 mit siedendem Kühlmedium betrieben werden, woraus ein besonders intensiver Wärmeübergang resultiert, während das Kühlmedium in einer weiteren Kühlzone als einphasiges Fluid verbleibt.

In weiteren Beispielen wird bei den in Fig. 1, 2, 3, 4 gezeigten Oxidationsreaktoren 1 ein gemeinsames erstes und zweites fluides Kühlmedium verwendet, das die erste und die zweite Kühlzone 60, 70 durchströmt (nicht gezeigt). Die Verwendung eines gemeinsamen Kühlmediums vereinfacht die Gestaltung des Kühlmittelkreislaufs. In einem Beispiel sind die erste und die zweite Kühlzone 60, 70 in einen gemeinsamen Kühlmedienkreislauf eingebettet und werden parallel oder sequentiell von dem Kühlmedium durchströmt.

In weiteren Beispielen stehen bei den in Fig. 1, 2, 3, 4 gezeigten Oxidationsreaktoren 1 die erste und zweite Kühlzone 60, 70 in Fluidverbindung und der Massenstrom des Kühlmediums durch die erste und die zweite Kühlzone 60, 70 ist separat regelbar (nicht gezeigt). Diese Ausgestaltung kombiniert die Vorteile eines vereinfachten Kühlmittelkreislaufs mit einer verbesserten Temperaturkontrolle des Oxidationsreaktors.

In weiteren Beispielen ist bei den in Fig. 1, 2, 3, 4 gezeigten Oxidationsreaktoren 1 eine Kühlvorrichtung zur Zwischenkühlung des Kühlmediums zwischen der ersten und zweiten Kühlzone vorhanden (nicht gezeigt). Diese Ausgestaltung ist vorteilhaft, wenn die Kühlmedien in beiden Kühlzonen einphasige Fluide bleiben sollen, aber trotzdem eine hohe Wärmeabfuhr aus der ersten Kühlzone erforderlich ist.

In weiteren Beispielen sind bei den in Fig. 1, 2, 3, 4 gezeigten Oxidationsreaktoren 1 mehr als zwei Kühlzonen vorhanden (nicht gezeigt). Zwar erhöht sich bei dieser Ausgestaltung der konstruktive Aufwand, jedoch kann auf diese Weise noch feiner auf örtliche Unterschiede im Wärmehaushalt des Oxidationsreaktors reagiert werden, so dass eine weiter verbesserte Temperaturkontrolle des Oxidationsreaktors resultiert.

In weiteren Beispielen wird bei den in Fig. 1, 2, 3, 4 gezeigten Oxidationsreaktoren 1 ein gemeinsames Kühlmedium verwendet wird, dass alle Kühlzonen 60, 70, etc. durchströmt (nicht gezeigt), wobei vorzugsweise Wasser als gemeinsames Kühlmedium verwendet wird. Wasser ist an den meisten Standorten in ausreichender Menge und Qualität verfügbar, ist ungiftig und weist Vorteile auf, wenn eine Kühlung in der entsprechenden Kühlzone als Siedekühlung realisiert werden soll. Die Verwendung eines gemeinsamen Kühlmediums vereinfacht zudem die Gestaltung des Kühlmittelkreislaufs.

In weiteren Beispielen ist bei den in Fig. 1, 2, 3, 4 gezeigten Oxidationsreaktoren 1 das Einlassende kegelstumpfförmig ausgestaltet und an seinem engen Ende mit dem Brenner 50 gasdicht verbunden und an seinem weiten Ende mit dem Reaktormantel 10 gasdicht verbunden.

In weiteren Beispielen ist bei den in Fig. 1, 2, 3, 4 gezeigten Oxidationsreaktoren 1 die Wärmeleitfähigkeit der ersten Schutzschicht kleiner als die Wärmeleitfähigkeit der zweiten Schutzschicht. Vorteilhaft bei dieser Ausgestaltung ist die bremsende Wirkung der kleineren Wärmeleitfähigkeit der ersten Schutzschicht auf das Aufheizen des Reaktormantels, insbesondere wenn eine oder mehrere Kühlzonen nicht betrieben werden.

In weiteren Beispielen sind bei den in Fig. 1, 2, 3, 4 gezeigten Oxidationsreaktoren 1 innerhalb der ersten und/oder innerhalb der zweiten Schutzschicht eine Vielzahl Expansionslücken vorhanden (nicht gezeigt), die bevorzugt gleichmäßig über den Umfang und/oder die Länge der ersten und/oder zweiten Schutzschicht 20, 30 verteilt sind. Auf diese Weise wird eine Beschädigung der Schutzschichten durch thermisch Ausdehnung vermieden.

In weiteren Beispielen ist dem in Fig. 1 gezeigten Oxidationsreaktor 1 zwischen dem Reaktormantel und der ersten Schutzschicht und/oder zwischen der ersten Schutzschicht und der zweiten Schutzschicht eine ringspaltförmige Expansionslücke angeordnet ist. Auf diese Weise wird eine Beschädigung der Schutzschichten durch thermische Ausdehnung vermieden.

In weiteren Beispielen werden bei den in Fig. 1, 2, 3, 4 gezeigten Oxidationsreaktoren 1 die Wanddicken und/oder Wärmeleitfähigkeiten der ersten und zweiten Schutzschicht 20, 30 so gewählt, dass die Temperatur des Reaktormantels an seiner äußeren Oberfläche zwischen 180 und 300 °C liegt, bevorzugt zwischen 200 und 250 °C liegt, falls kein Kühlmedium durch eine oder mehrere Kühlzonen geleitet wird. Diese genannten Temperaturen sind vorteilhaft, weil Diese genannten Temperaturen sind vorteilhaft, weil der Energieverbrauch, die Materialbeanspruchung und die Wärmebelastung des Bedienpersonals reduziert werden.

In weiteren Beispielen wird bei den in Fig. 1, 2, 3, 4 gezeigten Oxidationsreaktoren 1 Wasser als gemeinsames Kühlmedium verwendet und dass die Wanddicken und Wärmeleitfähigkeiten der ersten und der zweiten Schutzschicht 20, 30 und der Massenstrom des gemeinsamen Kühlmediums durch die Kühlzonen so gewählt werden, dass die Temperatur des aus den Kühlzonen austretenden Kühlmediums kleiner als 100 °C ist. Diese Grenztemperatur ist vorteilhaft, weil der Energieverbrauch, die Materialbeanspruchung und die Wärmebelastung des Bedienpersonals reduziert werden. Bei Demontagen einer oder mehrerer Kühlzonen wird auf diese Weise beim Bedienpersonal das Verbrennungsrisiko durch versehentliches Berühren des freigelegten Reaktormantels verringert.

In weiteren Beispielen werden die in Fig. 1, Fig. 2, Fig. 4 gezeigten Oxidationsreaktoren 15 für die nichtkatalytische Partialoxidation (POX) eines Kohlenwasserstoffe enthaltenden Einsatzstroms zu einem Wasserstoff und Kohlenoxide enthaltenden Produktstrom verwendet.

In weiteren Beispielen werden die in Fig. 1, Fig. 2, Fig. 4 gezeigten Oxidationsreaktoren 15 für die für die Partialoxidation eines Ammoniak enthaltenden Einsatzstroms zu einem Wasserstoff und Stickstoff enthaltenden Produktstrom verwendet.

In einem weiteren Beispiel wird der in Fig. 3 gezeigte Oxidationsreaktor für das autotherme Reformieren (ATR) eines Kohlenwasserstoffe enthaltenden Einsatzstroms zu einem Wasserstoff und Kohlenoxide enthaltenden Produktstrom verwendet.

In einem weiteren Beispiel wird der in Fig. 3 gezeigte Oxidationsreaktor für das autotherme Reformieren (ATR) eines Ammoniak enthaltenden Einsatzstroms zu einem Wasserstoff und Stickstoff enthaltenden Produktstrom verwendet.

Weitere Ausführungsbeispiele der Erfindung umfassen ein Verfahren zum Herstellen eines Wasserstoff und Kohlenoxide enthaltenden Produktstroms aus einem Kohlenwasserstoffe enthaltenden Einsatzstrom und einem Sauerstoff enthaltenden Oxidationsmittelstrom, umfassend folgende Schritte:
(a) Bereitstellen eines Oxidationsreaktors nach Anspruch 1 bis 15;
(b) Einleiten des Kohlenwasserstoffe enthaltenden Einsatzstroms, des Sauerstoff enthaltenden Oxidationsmittelstroms und eines optionalen Moderatorstroms über den Brenner in die Reaktionskammer;
(c) Umsetzen des Kohlenwasserstoffe enthaltenden Einsatzstroms und des Sauerstoff enthaltenden Oxidationsmittelstroms im Brenner und/oder in der Reaktionskammer unter Bedingungen der nichtkatalytischen Partialoxidation (POX);
(d) Ausleiten des Wasserstoff und Kohlenoxide enthaltenden Produktstroms über den Auslass.

Weitere Ausführungsbeispiele der Erfindung umfassen ein Verfahren zum Herstellen eines Wasserstoff und Kohlenoxide enthaltenden Produktstroms aus einem Kohlenwasserstoffe enthaltenden Einsatzstrom und einem Sauerstoff enthaltenden Oxidationsmittelstrom, umfassend folgende Schritte:
(a) Bereitstellen eines Oxidationsreaktors nach Anspruch 16;
(b) Einleiten des Kohlenwasserstoffe enthaltenden Einsatzstroms, des Sauerstoff enthaltenden Oxidationsmittelstroms und eines optionalen Moderatorstroms über den Brenner in die Reaktionskammer;
(c) Umsetzen des Kohlenwasserstoffe enthaltenden Einsatzstroms und des Sauerstoff enthaltenden Oxidationsmittelstroms im Brenner und/oder in der Reaktionskammer und/oder in der Katalysatorschüttung unter Bedingungen des autothermen Reformierens (ATR);
(d) Ausleiten des Wasserstoff und Kohlenoxide enthaltenden Produktstroms über den Auslass.

Weitere Ausführungsbeispiele der Erfindung umfassen ein Verfahren zum Herstellen eines Wasserstoff und Stickstoff enthaltenden Produktstroms aus einem Ammoniak enthaltenden Einsatzstrom und einem Sauerstoff enthaltenden Oxidationsmittelstrom, umfassend folgende Schritte:
(a) Bereitstellen eines Oxidationsreaktors nach Anspruch 1 bis 15;
(b) Einleiten des Ammoniak enthaltenden Einsatzstroms, des Sauerstoff enthaltenden Oxidationsmittelstroms und eines optionalen Moderatorstroms über den Brenner in die Reaktionskammer, optional Einleiten eines Dampfstroms in die Reaktionskammer;
(c) Umsetzen des Ammoniak enthaltenden Einsatzstroms und des Sauerstoff enthaltenden Oxidationsmittelstroms im Brenner und/oder in der Reaktionskammer unter Bedingungen der nichtkatalytischen Partialoxidation von Ammoniak;
(d) Ausleiten des Wasserstoff und Stickstoff enthaltenden Produktstroms über den Auslass.

Änderungen an den im Vorstehenden beschriebenen Ausführungsformen oder Ausgestaltungen der vorliegenden Offenbarung sind möglich, ohne den durch die beigefügten Ansprüche definierten Umfang der vorliegenden Offenbarung zu verlassen. Ausdrücke wie "einschließlich", "umfassend", "enthaltend", "haben", "ist", die zur Beschreibung und Beanspruchung der vorliegenden Offenbarung verwendet werden, sind in einer nicht ausschließenden Weise zu verstehen, d. h. sie lassen zu, dass auch nicht ausdrücklich beschriebene Gegenstände, Komponenten oder Elemente vorhanden sind. Verweise auf die Einzahl sind so zu verstehen, dass sie sich auch auf die Mehrzahl beziehen, sofern es im Einzelfall nicht ausdrücklich anders angegeben wird.

### Bezugszeichenliste

- [1]: Oxidationsreaktor
- [2]: Leitung
- [3]: Leitung
- [4]: Leitung (Auslass)
- [10]: Reaktormantel
- [20]: Erste Schutzschicht
- [30]: Zweite Schutzschicht
- [35]: Expansionslücken
- [40]: Leervolumen (Reaktorkammer)
- [50]: Brenner
- [60]: Erste Kühlzone
- [61]: Leitung Kühlwasser
- [62]: Leitung Kühlwasser
- [70]: Zweite Kühlzone
- [71]: Leitung Kühlwasser
- [72]: Leitung Kühlwasser
- [80]: ATR-Katalysatorschüttung

## Patentansprüche

1. Oxidationsreaktor zur Partialoxidation eines Einsatzstroms mit einem Sauerstoff enthaltenden Oxidationsmittelstrom zu einem Wasserstoff enthaltenden Produktstrom, umfassend:
(a) einen aus einem metallischen Werkstoff bestehenden, auf einem Teil seiner Länge zylinderförmigen, eine Längsachse aufweisenden, drucktragenden Reaktormantel mit einer ersten Wanddicke;
(b) eine im Inneren des Reaktormantels angebrachte erste Schutzschicht aus einem ersten feuerfesten Material mit einer zweiten Wanddicke;
(c) eine im Inneren der ersten Schutzschicht angebrachte zweite Schutzschicht aus einem zweiten feuerfesten Material mit einer dritten Wanddicke;
(d) ein im Inneren der zweiten Schutzschicht angeordnetes Leervolumen als Reaktionskammer;
(e) einen an einem Einlassende des Reaktormantels angebrachten Einlass für den Einsatzstrom, wobei der Einlass als Brenner ausgestaltet ist, durch den der Einsatzstrom, der Sauerstoff enthaltende Oxidationsmittelstrom und ein optionaler Moderatorstrom in die Reaktionskammer einleitbar sind;
(f) einen an einem Auslassende des Reaktormantels angebrachten Auslass, durch den der Produktstrom ausleitbar ist;
(g) eine an dem Reaktormantel angebrachte und diesen umgebende erste Kühlzone, mittels der ein erster Abschnitt des Reaktormantels mittels eines ersten fluiden Kühlmediums kühlbar ist;
(h) eine an dem Reaktormantel angebrachte und diesen umgebende zweite Kühlzone, mittels der ein zweiter Abschnitt des Reaktormantels mittels eines zweiten fluiden Kühlmediums kühlbar ist.

2. Oxidationsreaktor nach Anspruch 1, **dadurch gekennzeichnet, dass** die erste und die zweite Kühlzone separat betreibbar und separat montierbar und demontierbar sind.

3. Oxidationsreaktor nach einem der vorigen Ansprüche, **dadurch gekennzeichnet, dass** der Durchfluss des Kühlmediums durch die erste und die zweite Kühlzone separat regelbar ist.

4. Oxidationsreaktor nach einem der vorigen Ansprüche, **dadurch gekennzeichnet, dass** der Druck des Kühlmediums in der ersten und zweiten Kühlzone separat regelbar ist.

5. Oxidationsreaktor nach einem der vorigen Ansprüche, **dadurch gekennzeichnet, dass** ein gemeinsames erstes und zweites fluides Kühlmedium verwendet wird, das die erste und die zweite Kühlzone durchströmt.

6. Oxidationsreaktor nach einem der vorigen Ansprüche, **dadurch gekennzeichnet, dass** die erste und zweite Kühlzone in Fluidverbindung stehen und dass der Massenstrom des Kühlmediums durch die erste und die zweite Kühlzone separat regelbar ist.

7. Oxidationsreaktor nach einem der vorigen Ansprüche, **dadurch gekennzeichnet, dass** eine Kühlvorrichtung zur Zwischenkühlung des Kühlmediums zwischen der ersten und zweiten Kühlzone vorhanden ist.

8. Oxidationsreaktor nach einem der vorigen Ansprüche, **dadurch gekennzeichnet, dass** mehr als zwei Kühlzonen vorhanden sind.

9. Oxidationsreaktor nach einem der vorigen Ansprüche, **dadurch gekennzeichnet, dass** ein gemeinsames Kühlmedium verwendet wird, dass alle Kühlzonen durchströmt, wobei vorzugsweise Wasser als gemeinsames Kühlmedium verwendet wird.

10. Oxidationsreaktor nach einem der vorigen Ansprüche, **dadurch gekennzeichnet, dass** das Einlassende kegelstumpfförmig ausgestaltet ist und an seinem engen Ende mit dem Brenner gasdicht verbunden ist und an seinem weiten Ende mit dem Reaktormantel gasdicht verbunden ist.

11. Oxidationsreaktor nach einem der vorigen Ansprüche, **dadurch gekennzeichnet, dass** die Wärmeleitfähigkeit der ersten Schutzschicht kleiner ist als die Wärmeleitfähigkeit der zweiten Schutzschicht.

12. Oxidationsreaktor nach einem der vorigen Ansprüche, **dadurch gekennzeichnet, dass** innerhalb der ersten und/oder innerhalb der zweiten Schutzschicht eine Vielzahl von periodisch umlaufenden Expansionslücken und/oder von Expansionslücken in Längsrichtung vorhanden sind, die bevorzugt gleichmäßig über den Umfang und/oder die Länge der ersten und/oder zweiten Schutzschicht verteilt sind.

13. Oxidationsreaktor nach einem der vorigen Ansprüche, **dadurch gekennzeichnet, dass** zwischen dem Reaktormantel und der ersten Schutzschicht und/oder zwischen der ersten Schutzschicht und der zweiten Schutzschicht eine ringspaltförmige Expansionslücke angeordnet ist.

14. Oxidationsreaktor nach einem der vorigen Ansprüche, **dadurch gekennzeichnet, dass** die Wanddicken und/oder Wärmeleitfähigkeiten der ersten und zweiten Schutzschicht so gewählt werden, dass die Temperatur des Reaktormantels an seiner äußeren Oberfläche zwischen 180 und 300 °C liegt, bevorzugt zwischen 200 und 250 °C liegt, falls kein Kühlmedium durch eine oder mehrere Kühlzonen geleitet wird.

15. Oxidationsreaktor nach einem der vorigen Ansprüche, **dadurch gekennzeichnet, dass** Wasser als gemeinsames Kühlmedium verwendet wird und dass die Wanddicken und Wärmeleitfähigkeiten der ersten und der zweiten Schutzschicht und der Massenstrom des gemeinsamen Kühlmediums durch die Kühlzonen so gewählt werden, dass die Temperatur des aus den Kühlzonen austretenden Kühlmediums kleiner als 100 °C ist.

16. Oxidationsreaktor nach einem der vorigen Ansprüche, **dadurch gekennzeichnet, dass** ein Teil der Reaktionskammer mit einer Schüttung eines festen, partikelförmigen, für das autotherme Reformieren (ATR) aktiven Katalysators gefüllt ist.

17. Verwendung eines Oxidationsreaktors nach Anspruch 1 bis 15 für die nichtkatalytische Partialoxidation (POX) eines Kohlenwasserstoffe enthaltenden Einsatzstroms zu einem Wasserstoff und Kohlenoxide enthaltenden Produktstrom.

18. Verwendung eines Oxidationsreaktors nach Anspruch 16 für das autotherme Reformieren (ATR) eines Kohlenwasserstoffe enthaltenden Einsatzstroms zu einem Wasserstoff und Kohlenoxide enthaltenden Produktstrom.

19. Verwendung eines Oxidationsreaktors nach Anspruch 1 bis 15 für die Partialoxidation eines Ammoniak enthaltenden Einsatzstroms zu einem Wasserstoff und Stickstoff enthaltenden Produktstrom.

20. Verfahren zum Herstellen eines Wasserstoff und Kohlenoxide enthaltenden Produktstroms aus einem Kohlenwasserstoffe enthaltenden Einsatzstrom und einem Sauerstoff enthaltenden Oxidationsmittelstrom, umfassend folgende Schritte:
(a) Bereitstellen eines Oxidationsreaktors nach Anspruch 1 bis 15;
(b) Einleiten des Kohlenwasserstoffe enthaltenden Einsatzstroms, des Sauerstoff enthaltenden Oxidationsmittelstroms und eines optionalen Moderatorstroms über den Brenner in die Reaktionskammer;
(c) Umsetzen des Kohlenwasserstoffe enthaltenden Einsatzstroms und des Sauerstoff enthaltenden Oxidationsmittelstroms im Brenner und/oder in der Reaktionskammer unter Bedingungen der nichtkatalytischen Partialoxidation (POX);
(d) Ausleiten des Wasserstoff und Kohlenoxide enthaltenden Produktstroms über den Auslass.

21. Verfahren zum Herstellen eines Wasserstoff und Kohlenoxide enthaltenden Produktstroms aus einem Kohlenwasserstoffe enthaltenden Einsatzstrom und einem Sauerstoff enthaltenden Oxidationsmittelstrom, umfassend folgende Schritte:
(a) Bereitstellen eines Oxidationsreaktors nach Anspruch 16;
(b) Einleiten des Kohlenwasserstoffe enthaltenden Einsatzstroms, des Sauerstoff enthaltenden Oxidationsmittelstroms und eines optionalen Moderatorstroms über den Brenner in die Reaktionskammer;
(c) Umsetzen des Kohlenwasserstoffe enthaltenden Einsatzstroms und des Sauerstoff enthaltenden Oxidationsmittelstroms im Brenner und/oder in der Reaktionskammer und/oder in der Katalysatorschüttung unter Bedingungen des autothermen Reformierens (ATR);
(d) Ausleiten des Wasserstoff und Kohlenoxide enthaltenden Produktstroms über den Auslass.

22. Verfahren zum Herstellen eines Wasserstoff und Stickstoff enthaltenden Produktstroms aus einem Ammoniak enthaltenden Einsatzstrom und einem Sauerstoff enthaltenden Oxidationsmittelstrom, umfassend folgende Schritte:
(a) Bereitstellen eines Oxidationsreaktors nach Anspruch 1 bis 15;
(b) Einleiten des Ammoniak enthaltenden Einsatzstroms, des Sauerstoff enthaltenden Oxidationsmittelstroms und eines optionalen Moderatorstroms über den Brenner in die Reaktionskammer, optional Einleiten eines Dampfstroms in die Reaktionskammer;
(c) Umsetzen des Ammoniak enthaltenden Einsatzstroms und des Sauerstoff enthaltenden Oxidationsmittelstroms im Brenner und/oder in der Reaktionskammer unter Bedingungen der nichtkatalytischen Partialoxidation von Ammoniak;
(d) Ausleiten des Wasserstoff und Stickstoff enthaltenden Produktstroms über den Auslass.
